## Europäisches Patentamt

### European Patent Office
### Office européen des brevets

(11) Veröffentlichungsnummer: **0 023 011**
**B1**

(12) EUROPÄISCHE PATENTSCHRIFT

(45) Veröffentlichungstag der Patentschrift:
30.05.84

(21) Anmeldenummer: **80104096.5**

(22) Anmeldetag: **15.07.80**

(51) Int. Cl.³: **A 01 D 33/08**

(54) Verfahren und Vorrichtung zur Feldreinigung von Rodungsfrüchten.

(30) Priorität: **20.07.79 DE 2929376**

(43) Veröffentlichungstag der Anmeldung:
**28.01.81 Patentblatt 81/4**

(45) Bekanntmachung des Hinweises auf die Patenterteilung:
**30.05.84 Patentblatt 84/22**

(84) Benannte Vertragsstaaten:
**AT BE FR GB IT NL SE**

(56) Entgegenhaltungen:
**DE - A - 2 655 781**
**DE - C - 854 597**
**DE - C - 908 808**
**DE - U - 1 712 260**
**DE - U - 1 775 425**

(73) Patentinhaber: **Martin, Dietrich, Paternoster 5,**
**D-8851 Mertingen (DE)**

(72) Erfinder: **Martin, Dietrich, Paternoster 5,**
**D-8851 Mertingen (DE)**

(74) Vertreter: **Munk, Ludwig, Dipl.-Ing.,**
**Prinzregentenstrasse 1, D-8900 Augsburg (DE)**

## Beschreibung

Die Erfindung betrifft nach einem ersten Erfindungsgedanken ein Verfahren zur Feldreinigung von Rodungsfrüchten, die nach der Rodung allseitig gezielten Druckluftstrahlen ausgesetzt werden, und geht gemäss einem weiteren Erfindungsgedanken auf eine Vorrichtung zur Durchführung dieses Verfahrens mit einem Verdichter zur Bereitstellung der Druckluft und mit mindestens einer mittels einer Druckluftleitung hiermit verbundenen Strahldüse.

Ein Verfahren und eine Vorrichtung dieser Art sind aus der DE-A-2 655 781 bekannt. Nachteilig hierbei ist, dass eine vergleichsweise lange Strahlzeit sowie ein vergleichsweise geringer Abstand der Strahldüse von den zu reinigenden Rodungsfrüchten benötigt werden, um eine zufriedenstellende Funktion zu gewährleisten, was sich negativ auf die erzielbare Durchsatzleistung und damit die Wirtschaftlichkeit auswirken kann.

Hiervon ausgehend ist es daher die Aufgabe der vorliegenden Erfindung, das bekannte Verfahren so zu verbessern, dass möglichst kurze Strahlzeiten erreichbar sind und die Distanz zwischen den Strahldüsen und den zu reinigenden Früchten vergrössert werden kann. Gemäss einer weiteren Aufgabe der Erfindung soll eine einfache und kostengünstige Vorrichtung zur Durchführung des Verfahrens bereitgestellt werden.

Die verfahrensmässige Lösung der genannten Aufgabe besteht erfindungsgemäss darin, dass die Druckluftstrahlen, mit welchen die zu reinigenden Rodungsfrüchte beaufschlagt werden, mit Hilfe von Wasser gehärtet und stabilisiert werden, welches der zur Bildung der Druckluftstrahlen verwendeten Luft von aussen zugesetzt wird.

Das hohe spezifische Gewicht von Luft mit hohem Wassergehalt sowie die von der Luft mitgerissenen Wassertröpfchen des in der Luft nicht mehr gelösten Wassers ergeben eine hohe Schlagkraft und eine ausgezeichnete Stabilisierung der Reinigungsstrahlen. Die erforderlichen Strahlzeiten können daher vergleichsweise stark zurückgenommen und die Distanzen zwischen den Strahldüsen und den zu reinigenden Rodungsfrüchten vergrössert werden, was in vorteilhafter Weise einen Durchsatzbetrieb mit hohen Durchsatzleistungen erleichtert. Das der Druckluft von aussen zugegebene Wasser ermöglicht dabei in vorteilhafter Weise die Einhaltung eines gleichmässigen Feuchtigkeitsgehalts der Pressluftstrahlen und damit eine gleichbleibende Reinigungsqualität in jeder Betriebssituation.

In der oben bereits zitierten DE-A-2 655 781 werden im Zusammenhang mit dem gattungsgemässen Verfahren zur Frage der Kondensatabscheidung bei der Herstellung der zur Bildung der Druckluftstrahlen verwendeten Druckluft keinerlei Aussagen gemacht. Es ist daher der Fall nicht auszuschliessen, dass bei der Umsetzung der bekannten Lehre in die Praxis unter Umständen keine Kondensatabscheidung vorgesehen wird. Unter dieser Annahme ergäbe sich auch hier ein gewisser, aus der natürlichen Luftfeuchtigkeit stammender Wassergehalt der Druckluftstrahlen. Dieser Wassergehalt stünde dabei jedoch stets in einer festen Relation zum momentanen natürlichen Feuchtigkeitsgehalt der Luft. Diese natürliche Luftfeuchtigkeit kann jedoch bekanntlich starken Schwankungen unterworfen sein, so dass auch unter genannter Annahme bei der bekannten Anordnung keine gleichbleibende Qualität und Funktionssicherheit hinsichtlich Härtung und Stabilisierung der Druckluftstrahlen erreichbar wäre. Ganz abgesehen davon ist aber auch davon auszugehen, dass die natürliche Luftfeuchtigkeit im Herbst, das heisst in der Erntezeit von Rodungsfrüchten, infolge der dabei schon sehr starken Nachtabkühlung der Luft verhältnismässig gering sein kann. Demgegenüber wird durch die erfindungsgemässen Massnahmen sichergestellt, dass in jeder Betriebssituation eine genau dosierbare Härtung und Stabilisierung der Druckluftstrahlen gewährleistet ist.

Das der Luft zugesetzte Wasser kann in einem Tank mitgeführt oder vor Ort etwa durch Auspressen von Blattmaterial gewonnen werden. Eine besonders vorteilhafte Ausgestaltung kann dabei darinbestehen, dass das den Druckluftstrahlen zugesetzte Wasser in einem von der Druckluftherstellung unabhängigen Verfahrensschritt aus der Umgebungsluft abgeschieden wird. Hierbei fällt in vorteilhafter Weise vergleichsweise reines Wasser an, so dass ein Zusetzen der Strahldüsen nicht zu befürchten ist. Dennoch kann hierbei auf das Mitführen eines Tanks bzw. das Nachfüllen eines derartigen Tanks verzichtet werden.

Eine weitere vorteilhafte Massnahme kann darin bestehen, dass auf das Abscheiden des in der in einem Verdichter verdichteten Luft gelösten Wassers gleichzeitig verzichtet wird. Dieses beim Verdichtungsvorgang ausfallende Wasser senkt den Bedarf an von aussen zuzugebendem Wasser und gewährleistet gleichzeitig eine Wasserschmierung des Verdichters. Hierbei kann daher in vorteilhafter Weise auf eine Ölschmierung mit nachfolgender Ölabscheidung verzichtet werden, was sich nicht nur vorteilhaft auf den baulichen Aufwand, sondern auch auf die Umweltfreundlichkeit auswirkt.

Die auf die Vorrichtung sich beziehende Aufgabe wird im Zusammenhang mit einer gattungsgemässen Vorrichtung eingangs erwähnter Art dadurch gelöst, dass in der zur Strahldüse führenden Druckluftleitung mindestens eine Mischdüse mit mindestens einem Eingang für Wasser angeordnet ist. Hierbei ist in vorteilhafter Weise sichergestellt, dass das der Luft beizumischende Wasser infolge des Venturieffekts mitgerissen wird, was einen einfachen Wassertransport gewährleistet.

Zur Abscheidung von Wasser aus der Umgebungsluft kann hierbei in vorteilhafter Weise ein in einem an die Umgebung angeschlossenen Luftkanal angeordneter Kühler vorgesehen sein, unterhalb dessen eine Auffangwanne angeordnet ist, die mittels einer Wasserleitung mit einer in der Druckluftleitung angeordneten Mischdüse verbunden ist.

Eine weitere besonders zu bevorzugende Massnahme kann darin bestehen, dass dem Kühler in Strömungsrichtung der Luft eine Heizeinrichtung zugeordnet ist. Hiermit wird die dem Kühler zugeführte Luft erwärmt, wodurch die Wasseraufnahmefähigkeit heraufgesetzt wird, so dass eine besonders hohe Wasserausbeute erreichbar ist. Die genannte Heizeinrichtung kann zweckmässig durch von der als Kraftquelle dienenden Brennkraftmaschine abgegebene Abgase beaufschlagt sein. Die in den Abgasen vorhandene Restenergie steht in vorteilhafter Weise praktisch kostenlos zur Verfügung, was sich ebenfalls vorteilhaft auf die Wirtschaftlichkeit auswirken kann.

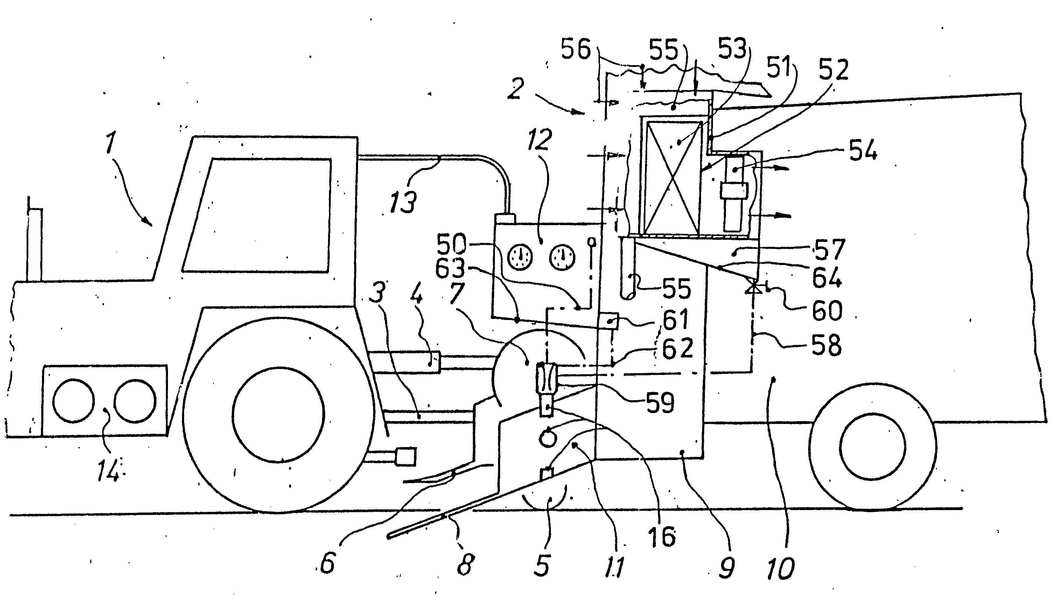

Weitere zweckmässige Ausgestaltungen und vorteilhafte Weiterbildungen der übergeordneten Massnahmen ergeben sich aus der nachstehenden Beschreibung eines Ausführungsbeispiels anhand der Zeichnung in Verbindung mit den weiteren Unteransprüchen.

Die Zeichnung zeigt eine an eine Zugmaschine angehängte Rübenerntemaschine mit einer erfindungsgemässen Reinigungseinrichtung in schematischer Darstellung.

In der Zeichnung sind die Zugmaschine mit 1 und die hieran angehängte Rübenvollerntemaschine mit 2 bezeichnet. Zur Übertragung der Zugkraft und eines Arbeitsdrehmoments sind eine Anhängekupplung 3 und eine Zapfwelle 4 vorgesehen. Die Erntemaschine 2 ist in an sich bekannter Weise mit einer seitlich angeordneten, durch ein bei 5 angedeutetes Tastrad höhenmässig steuerbaren Köpfeinrichtung 6 versehen, mit welcher in einem ersten Arbeitsgang die mit Blättern besetzten Rübenköpfe abgetrennt werden. Diese können etwa mittels einer bei 7 angedeuteten Trommel aufgenommen und seitlich neben dem Gespann abgelegt werden. Zur Rodung der so geköpften Rüben ist eine gegenüber der Köpfeinrichtung 6 um einen Zeilenabstand seitlich versetzte Rodungseinrichtung vorgesehen, wie hier durch die Zinken 8 angedeutet ist. Die von den Zinken 8 aufgenommenen Früchte werden einem bei 9 angedeuteten Elevator, etwa einem Hubrad oder dergleichen, zugeführt und hierüber in einen Bunker 10 eingebracht.

Zur pneumatischen Reinigung der gerodeten Rüben sind in dem von diesen zurückzulegenden Transportweg zwischen den Zinken 8 und dem Bunker 10 eine oder mehrere Reinigungskammern der bei 11 angedeuteten Art vorgesehen, die mit mehreren, zweckmässig kranzartig angeordneten Strahldüsen 16 besetzt sind, an denen die zu reinigenden Rüben vorbeigeführt werden. Die Strahldüsen 16 werden über eine bei 50 angedeutete Druckluftleitung mit Druckluft versorgt. Zur Bereitstellung der Druckluft ist ein bei 14 angedeuteter Verdichter, zweckmässig ein Kolbenverdichter vorgesehen, der im dargestellten Ausführungsbeispiel direkt an die Zugmaschine 1 angebaut sein soll. Im dargestellten Ausführungsbeispiel ist der Verdichter 14 über eine Versorgungsleitung 13 mit einem nachgeordneten Druckbehälter 12 verbunden, an den die den Strahldüsen 16 zugeordnete Druckluftleitung 50 angeschlossen ist. Der einen Zwischenpuffer zum Ausgleich von Druckschwankungen bildende Druckbehälter 12 ist im dargestellten Ausführungsbeispiel an das Erntegerät 2 angebaut. Es ist möglich, jeder Strahldüse 16 eine eigene Druckluftleitung zuzuordnen oder eine gemeinsame Druckluftleitung vorzusehen, die erst in einem düsennahen Bereich entsprechend verzweigt ist.

Zur Erzielung möglichst harter Druckluftstrahlen und damit zur Bewerkstelligung eines guten Reinigunqseffects wird gemäss der Erfindung mit feuchter Luft gearbeitet. Es wird angenommen, dass das höhere spezifische Gewicht von Luft mit einem hohen Wassergehalt sowie die von der Luft mitgerissenen Wassertröpfchen des in der Luft nicht mehr gelösten Wassers eine hohe Schlagkraft und eine ausgezeichnete Stabilisierung der aus den Strahldüsen 16 austretenden Luftstrahlen bewerkstelligen. Die erforderlichen Strahlzeiten können somit in vorteilhafter Weise zurückgenommen und die Distanzen zwischen den Strahldüsen 16 und den zu reinigenden Früchten vergrössert werden. Da mit feuchter Luft gearbeitet wird, kann in vorteilhafter Weise auf die bei Luftverdichtern üblicherweise vorgesehene Kondensatabscheidung verzichtet werden. Dem Verdichter 14 braucht daher kein Kondensatabscheider vor- oder nachgeordnet sein, was die gesamte Druckluftanlage verbilligt. Das aus der vom Verdichter 14 angesaugten Luft ausfallende Wasser wird von der Restluft einfach mitgerissen und tritt an den Strahldüsen 16 als in den Druckluftstrahlen fein verteilte Tröpfchen in Erscheinung, die eine hohe Schlagkraft und Stabilisierung der Druckluftstrahlen bewirken. Dasselbe gilt auch für das bis zum Schluss in der Luft gelöste Wasser, das eine Erhöhung des spezifischen Luftgewichts und damit ebenfalls eine gute Stabilisierung und Schlagkrafterhöhung bewirkt.

Mit zunehmendem Tröpfchengehalt in den Druckluftstrahlen wird die Schlagkraft höher. Der den Strahldüsen 16 zugeführten Druckluft wird daher zusätzlich Wasser zugesetzt. Dieses kann in einem Tank mitgeführt oder einfach der Umgebungsluft entzogen werden. Hierzu ist im dargestellten Ausführungsbeispiel ein bei 51 angedeuteter Luftkanal vorgesehen, in welchem ein als Ganzes mit 52 bezeichneter Kühler angeordnet ist. Der Kühler 52 kann einfach aus mit einem geeigneten Kältemittel beaufschlagten Lamellen 53 bestehen, zwischen denen die von einem bei 54 angedeuteten Gebläse angesaugte Luft hindurchgeführt ist. Dem Kühler 52 ist im dargestellten, besonders bevorzugten Ausführungsbeispiel eine Heizeinrichtung 55 vorgeordnet, die etwa durch ein Röhrengitter oder dergleichen gebildet sein kann, das mit Abgas beheizt werden kann, hier zweckmässig mit von der Brennkraftmaschine der Zugmaschine 1 abgegebenem Abgas. Hierzu ist ein zum Auspuff der Zugmaschine 1 führender Abgasstutzen vorgesehen. Die Heizeinrichtung 55 sorgt für einen besonders hohen Feuchtigkeitsgehalt der in den Luftkanal 51 angesaugten Umgebungsluft. Der Luftkanal 51 ist im dargestellten Ausführungsbeispiel oben und vorne mit Lufteintrittsquerschnitten versehen, wie durch die Pfeile 56 angedeutet ist. Hierdurch ist sichergestellt, dass stets ausreichend Luft nachströmen kann.

Die am Kühler 52 vorbeigeführte Luft wird abgekühlt und verliert somit an Wasser. Zum Auffangen des an den Lamellen 53 des Kühlers sich niederschlagenden Wassers ist unterhalb des Kühlers 52 eine Auffangwanne 57 vorgesehen, in welcher das von den Lamellen 53 abtropfende Wasser gesammelt wird. An die Auffangwanne 57 ist eine Wasserleitung 58 angeschlossen, die zu einer in der Druckluftleitung 50 angeordneten Mischdüse 59 führt. Die Mischdüse 59 arbeitet zweckmässig nach dem Venturi-Prinzip, wonach der die Düse durchsetzende Luftstrom eine Saugkraft in der Wasserleitung 58 erzeugt. Zur Dosierung des aus der Auffangwanne 57 abgezogenen Wassers kann in der Wasserleitung 58 ein Dosierventil 60 angeordnet sein. Bei Anordnungen mit einem einen Zwischenpuffer bildenden Druckbehälter der im dargestellten Ausführungsbeispiel bei 12 angedeuteten Art ist davon auszugehen, dass sich im Druckbehälter 12 eine gewisse Kondensatmenge niederschlägt. Der Druckbehälter 12 ist daher im dargestellten Ausführungsbeispiel mit einem Kondensatauslass 61 versehen, an den eine Wasserleitung 62 angeschlossen ist. Die Wasserleitung 62 kann als Zweigleitung der zur Auffangwanne 57 führenden Wasserleitung 58 ausgebildet sein. Im dargestellten Ausführungsbeispiel ist der Wasserleitung 62 ein separater Eingang an der Mischdüse 59 zugeordnet. Selbstverständlich wäre es auch denkbar, beiden Wasserleitungen separate Mischdüsen entweder in den zu den Strahldüsen 16 führenden Einzelleitungen oder der den Strahldüsen 16 zugeordneten Sammelleitung zuzuordnen. Zur Bewerkstelligung eines selbsttätigen Auslaufs ist der Boden 63 des Druckbehälters 12 zum Kondensatauslass 61 hin geneigt. Dasselbe gilt für den Boden 64 der Auffangwanne 57.

Die vorstehend beschriebene, im Luftkanal 51 untergebrachte Einrichtung zur Wassergewinnung kann wie der Verdichter 14 an die Zugmaschine 1 oder wie der Druckbehälter 12 an das Erntegerät 2 angebaut sein. Im dargestellten Ausführungsbeispiel ist der die Wassergewinnungseinrichtung aufnehmende Luftkanal 51 einfach seitlich an das Gehäuse des Elevators 9 angesetzt.

Im dargestellten Ausführungsbeispiel ist lediglich eine Reinigungskammer 11 mit einem Düsenkranz vorgesehen, der mit feuchter Luft beaufschlagt wird. In der Praxis sind normalerweise mehrere Düsenkränze hintereinander angeordnet. Vielfach kann es sich daher als zweckmässig erweisen, den Wasseranteil der den einzelnen Düsenkränzen zugeführten Luft in Transportrichtung der zu reinigenden Rodungsfrüchte abzustufen. Dies kann einfach etwa durch eine Dosierung der beigemischten Wassermenge erfolgen. Sofern mehrere Reinigungskammern 11 hintereinander angeordnet sind, kann auch so vorgegangen werden, dass in den vorderen Kammern mit härteren Druckluftstrahlen gearbeitet wird und in den hinteren Kammern praktisch eine Trocknung vorgenommen wird, indem der diesen Kammern zugeführten Druckluft weniger oder gar kein Wasser mehr zugesetzt wird.

**Patentansprüche**

1. Verfahren zur Feldreinigung von Rodungsfrüchten, die nach der Rodung allseitig gezielten Druckluftstrahlen ausgesetzt werden, dadurch gekennzeichnet, dass die Druckluftstrahlen, mit welchen die zu reinigenden Rodungsfrüchte beaufschlagt werden, mit Hilfe von Wasser gehärtet und stabilisiert werden, welches der zur Bildung der Druckluftstrahlen verwendeten Luft von aussen zugesetzt wird.

2. Verfahren nach Anspruch 1, dadurch gekennzeichnet, dass der zur Bildung von Druckluftstrahlen verwendeten Luft aus der Umgebungsluft in einem von der Druckluftherstellung unabhängigen Verfahrensschritt abgeschiedenes Wasser zugesetzt wird.

3. Verfahren nach Anspruch 2, dadurch gekennzeichnet, dass zusätzlich das in der in einem Verdichter verdichteten Luft gelöste Wasser nicht abgeschieden wird.

4. Verfahren nach wenigstens einem der vorhergehenden Ansprüche, dadurch gekennzeichnet, dass der Wassergehalt der zur Reinigung verwendeten Luft in Transportrichtung der zu reinigenden Rodungsfrüchte abnimmt.

5. Vorrichtung zur Durchführung des Verfahrens nach wenigstens einem der vorhergehenden Ansprüche mit einem Verdichter (14) zur Bereitstellung der Druckluft und mit mindestens einer mittels einer Druckluftleitung (50) hiermit verbundenen Strahldüse (16), dadurch gekennzeichnet, dass in der zur Strahldüse (16) führenden Druckluftleitung (50) mindestens eine Mischdüse (59) mit mindestens einem Eingang für Wasser angeordnet ist.

6. Vorrichtung nach Anspruch 5, gekennzeichnet durch einen in einem an die Umgebung angeschlossenen Luftkanal (51) angeordneten Kühler (52), unterhalb dessen eine Auffangwanne (57) angeordnet ist, die mittels einer Wasserleitung (58) mit einer in der Druckluftleitung (50) angeordneten Mischdüse (59) verbunden ist.

7. Vorrichtung nach Anspruch 6, dadurch gekennzeichnet, dass dem Kühler (52) eine Heizeinrichtung (55) vorgeordnet ist.

8. Vorrichtung nach Anspruch 7, dadurch gekennzeichnet, dass die Heizeinrichtung (55) durch von der als Kraftquelle dienenden Brennkraftmaschine abgegebene Auspuffgase beaufschlagt ist.

9. Vorrichtung nach wenigstens einem der vorhergehenden Ansprüche 5 bis 8 mit einem dem Verdichter (14) nachgeordneten Druckbehälter (12), dadurch gekennzeichnet, dass der Druckbehälter (12) mit einem Kondenswasserauslass (61) versehen ist, der an eine Mischdüse (59) angeschlossen ist.

10. Vorrichtung nach Anspruch 9, dadurch gekennzeichnet, dass der Boden (63) des Druckbehälters (12) zum Kondenswasserauslass (61) hin geneigt ist.

## Claims

1. A process for the field cleaning of harvested crops which, after harvesting, are subjected to compressed air jets directed towards all sides, characterized in that the compressed air jets which act upon the harvested crops to be cleaned are hardened and stabilized with the aid of water which is externally added to the air used to form the compressed air jets.

2. The process as set forth in claim 1, characterized in that water extracted from the ambient air in a process step independent of the compressed air production is added to the air used to form the compressed air jets.

3. The process as set forth in claim 2, characterized in that, in addition, the water dissolved in the air compressed in a compressor is not extracted.

4. The process as set forth in at least one of the preceding claims, characterized in that the water content of the air used for cleaning decreases in the transport direction of the harvested crops to be cleaned.

5. A device for executing the process as set forth according to at least one of the preceding claims, comprising a compressor (14) for preparing the compressed air and further comprising at least one jet nozzle (16) connected thereto by means of a compressed air line (50), characterized in that at least one mixing nozzle (59) with at least one water inlet is disposed in the compressed air line (50) leading to said jet nozzle (16).

6. The device as set forth in claim 5, characterized by a cooler (52) disposed in an air duct (51) connected to the ambience, a drip pan (57) being disposed beneath said cooler and being connected by means of a water line (58) with a mixing nozzle (59) located in the compressed air line (50).

7. The device as set forth in claim 6, characterized in that a heating means (55) is located upstream of said cooler (52).

8. The device as set forth in claim 7, characterized in that said heating means (55) is acted upon by exhaust gases produced by the internal combustion engine which serves as the power source.

9. The device according to at least one of preceding claims 5 to 8, comprising a compressed-air reservoir (12) located downstream of said compressor (14), characterized in that said compressed-air reservoir (12) is provided with a condensation water outlet (61) which is connected to a mixing nozzle (59).

10. The device as set forth in claim 9, characterized in that the base (63) of said compressed-air reservoir (12) is inclined towards said condensation water outlet (61).

## Revendications

1. Procédé de nettoyage sur le champ de tubercules déterrés, qui, après leur arrachage du sol, sont exposés tout autour à des jets d'air comprimé dirigés en tous sens, caractérisé en ce que les jets d'air comprimé agissant sur les tubercules déterrés sont durcis et stabilisés à l'aide d'eau ajoutée de l'extérieur à l'air employé à la formation de ces jets d'air comprimé.

2. Procédé selon la revendication 1, caractérisé en ce qu'à l'air requis à la formation des jets d'air comprimé est ajoutée de l'eau séparée de l'air atmosphérique à un stade indépendant de la production d'air comprimé.

3. Procédé selon la revendication 2, caractérisé en ce que l'eau dissoute dans l'air comprimé dans un compresseur n'en est pas séparée.

4. Procédé selon une au moins des revendications précédentes, caractérisé en ce que la teneur en eau de l'air employé au nettoyage des tubercules diminue graduellement dans le sens du transport de ces derniers.

5. Dispositif pour la mise en œuvre du procédé selon l'une ou l'autre des revendications précédentes, équipé d'un compresseur (14) pour la compression de l'air requis au nettoyage des tubercules et d'au moins une tuyère (16) raccordée à ce compresseur (14) au moyen d'une conduite d'air comprimé (50), caractérisé en ce que dans cette conduite d'air comprimé (50) allant vers la tuyère (16) est prévue au moins une soupape mélangeuse (59), munie d'au moins une entrée d'eau.

6. Dispositif selon la revendication 5, caractérisé en ce qu'il est équipé d'un refroidisseur ou condenseur (52) disposé dans un carneau à air (51), qui se trouve en communication avec l'atmosphère environnante, condenseur sous lequel est disposé un bac collecteur d'eau (57), raccordé par l'entremise d'une conduite d'eau (58) à une soupape mélangeuse (59), prévue dans la conduite d'air comprimé (50).

7. Dispositif selon la revendication 6, caractérisé en ce qu'un élément chauffant (55) est prévu en amont dudit refroidisseur ou condenseur (52).

8. Dispositif selon la revendication 7, caractérisé en ce que ledit élément chauffant (55) est chauffé par les gaz d'échappement du moteur à combustion interne chargé de la commande de l'ensemble.

9. Dispositif selon l'une au moins des revendications précédentes 5 à 8, équipé d'un réservoir á air comprimé (12), prévu en aval dudit compresseur (14), caractérisé en ce que ce réservoir à air comprimé (12) est muni d'une tubulure de sortie (61) pour l'eau de condensation, qui est raccordée à ladite soupape mélangeuse (59).

10. Dispositif selon la revendication 9, caractérisé en ce que le fond (63) dudit réservoir à air comprimé (12) descend graduellement vers la sortie d'eau de condensation (61).